# DEMANDE DE BREVET EUROPEEN

(11) **EP 3 037 659 A1**
(43) Date de publication de la demande: **29.06.2016**
(21) Numéro de dépôt: 15199722.8
(22) Date de dépôt: 14.12.2015
(51) Int. Cl.: F03D 9/00, F03B 3/12, F03B 13/00, F03D 3/06

(54) **SYSTEME DE GENERATION D'ENERGIE ELECTRIQUE IN SITU POUR CABLE SOUS-MARIN OU AERIEN**

(30) Priorité: 22.12.2014 FR 1463079
(71) Demandeur: COMMISSARIAT A L'ENERGIE ATOMIQUE ET AUX ENERGIES ALTERNATIVES, 75015 Paris (FR)
(72) Inventeur: AIXALA, Luc, 38120 SAINT-EGREVE (FR)
(74) Mandataire: Cabinet Laurent & Charras

(57) **Abrégé**

Ce système de récupération d'énergie renouvelable pour générer localement de l'énergie électrique est notamment associé à un câble aérien ou sous-marin ou à une conduite aérienne ou sous-marine.

Ce système comprend une turbine (1) d'enveloppe externe sensiblement cylindrique montée rotative sur le câble ou sur la conduite à l'aide d'organes de montage, et un alternateur relié cinématiquement ou intégré à ladite turbine (1).

Les organes de montage et la turbine (1) sont constitués en deux parties (A, B) séparables, pourvues d'éléments d'assemblage (4) pour permettre leur assemblage une fois positionnées sur le câble ou sur la conduite.

## Description

### DOMAINE DE L'INVENTION

La présente invention se rapporte au domaine technique général des conduites et des câbles permettant d'acheminer soit des fluides, soit de l'énergie électrique et/ou des données. Ces câbles ou ces conduites peuvent être immergés dans un milieu marin ou disposés de façon aérienne.

La présente invention concerne plus particulièrement la récupération d'énergie renouvelable sous-marine ou aérienne, de faible puissance, pour alimenter en énergie électrique principalement des capteurs de contrôle et de surveillance associés à un tel câble ou à une telle conduite. Il est en effet nécessaire d'équiper ce genre de câble ou de conduite de capteurs de contrainte, de pression, de température ou aptes par exemple à détecter d'autres paramètres physiques tels que des vibrations, de manière à pouvoir identifier ou anticiper un éventuel vieillissement prématuré, des risques de ruptures ou un enfouissement anormal, nécessitant une intervention de maintenance.

De tels capteurs de contrôle permettent de surveiller l'état et l'environnement d'un câble ou d'une conduite notamment immergés présentant une accessibilité très limitée. Ces capteurs doivent être alimentés électriquement afin de pouvoir fonctionner et pour transmettre des mesures avec des signaux électriques. Ces derniers permettent alors d'effectuer un contrôle à distance et d'éviter l'utilisation de piles ou de batteries, dont l'autonomie est relativement courte et nécessitent par conséquent un remplacement fréquent.

### ETAT ANTERIEUR DE LA TECHNIQUE

Il est connu d'avoir recours à des systèmes de récupération d'énergie, notamment hydrolienne, assurant l'alimentation des tels capteurs de contrôle. Ainsi, le document US 2013/0147199 décrit un système de récupération d'énergie comportant une turbine associée à un alternateur de manière à générer l'électricité nécessaire au fonctionnement des capteurs de contrôle. Ces turbines, connues en tant que telles, sont montées sur des conduites ou des câbles rigides. Les systèmes connus permettent donc de produire in situ l'énergie électrique nécessaire à leur fonctionnement.

Ces systèmes s'avèrent en revanche inadaptés à un montage sur des câbles ou des conduites flexibles. De telles conduites flexibles sont par exemple utilisées dans un milieu sous-marin pour acheminer des fluides, et ce, sur de très longues distances. Ces conduites ou ces câbles doivent en outre être sorties de l'eau pour les équiper de systèmes de génération d'énergie électrique ou pour remplacer de tels systèmes défectueux. , et sont généralement stockés sur des bobines.

Il faut noter par ailleurs que l'utilisation de systèmes connus implique la mise en oeuvre notamment de turbines d'hydroliennes ou d'éoliennes, qui ne sont pas adaptées pour être montées sur des conduites ou des câbles flexibles. En effet, des flexions répétées du câble ou de la conduite en question, conduisent à générer des efforts et des contraintes mécaniques substantielles, susceptibles de favoriser ainsi des défaillances prématurées.

### EXPOSE DE L'INVENTION

L'objet de la présente invention vise à remédier aux inconvénients mentionnés ci-dessus et à fournir un système de récupération locale d'énergie apte à être monté sur un câble ou sur une conduite flexible.

Un autre objet de la présente invention vise à fournir un système de récupération d'énergie susceptible d'être monté sur un câble ou sur une conduite déjà installé(e) ou immergé(e), ne nécessitant ni une sortie d'eau, ni un démontage.

Les objets assignés à l'invention sont atteints à l'aide d'un système de récupération d'énergie renouvelable pour générer localement de l'énergie électrique destinée à alimenter notamment des capteurs de contrôle, associés à un câble aérien ou sous-marin ou à une conduite aérienne ou sous-marine, ledit système comprenant une turbine d'enveloppe externe sensiblement cylindrique, montée rotative sur le câble ou sur la conduite à l'aide d'organes de montage et un alternateur relié cinématiquement ou intégré à ladite turbine.

Selon l'invention, les organes de montage et la turbine sont constitués en deux parties séparables, pourvues d'éléments d'assemblage pour permettre leur assemblage une fois positionnées sur le câble ou sur la conduite.

Avantageusement, toutes les pièces constitutives du système de récupération d'énergie conforme à l'invention sont constituées de deux parties séparables. Il en est de même pour l'alternateur selon un exemple de réalisation du système conforme à l'invention.

Selon un exemple de réalisation conforme à l'invention, chaque extrémité longitudinale de la turbine est formée par les extrémités d'aubes reliées entre-elles par l'intermédiaire d'une bague circulaire portant des éléments d'assemblage.

Selon un exemple de réalisation conforme à l'invention, les organes de montage sont conçus pour s'adapter sur un câble ou sur une conduite flexible, les dits organes de montage comportant à cet effet des moyens pour absorber ou éviter des efforts et des contraintes résultant d'une flexion dudit câble ou de ladite conduite.

Selon un exemple de réalisation conforme à l'invention, les organes de montage comprennent un roulement s'étendant selon un plan central et transversal à la turbine, ledit roulement unique constituant ainsi, de par son positionnement, les moyens de compensation.

Selon un exemple de réalisation conforme à l'invention, les organes de montage comprennent un premier roulement disposé à une première extrémité longitudinale de la turbine, et un second roulement disposé à une seconde extrémité longitudinale de ladite turbine, ledit second roulement étant relié au câble ou à la conduite par l'intermédiaire des moyens de compensation.

Selon un autre exemple de réalisation du système conforme à l'invention, les moyens de compensation comprennent :
- un support solidaire de la conduite ou du câble,
- ledit support étant pourvu sur sa périphérie externe de languettes radiales espacée angulairement de 90°, et
- un corps périphérique entourant le support et pourvu de glissières radiales internes, engagées chacune avec jeu mécanique sur une languette radiale, le second roulement étant monté fixe avec sa partie intérieure sur ledit corps périphérique, sa partie extérieure étant solidaire de la turbine.

Selon un exemple de réalisation conforme à l'invention, le support comprend une partie de rotule interne montée fixe sur le câble ou sur la conduite et une partie de rotule externe comportant les languettes radiales et montée mobile sur la partie de rotule interne.

Les objets assignés à l'invention sont également atteints :
- pour un câble électrique et/ou de communication, flexible, comportant au moins un système de récupération d'énergie tel que décrit ci-dessus ;
- pour une conduite flexible pour l'acheminement de fluides, comportant au moins un système de récupération d'énergie tel que décrit ci-dessus.

Un avantage du système de récupération d'énergie conforme à l'invention réside dans le fait de pouvoir équiper facilement un câble ou une conduite flexible avec un système de récupération d'énergie par exemple lors de son déroulement depuis un navire.

Un autre avantage du système conforme à l'invention réside dans la possibilité d'équiper un câble ou une conduite, par exemple en milieu sous-marin sans qu'une remontée à la surface dudit câble ou de ladite conduite ne soit nécessaire. Il en résulte un gain de temps substantiel pour une telle opération.

Le système conforme à l'invention présente l'avantage déterminant de pouvoir équiper des câbles ou des conduites flexibles sans risquer d'altérer la durée de vie dudit système, et ce grâce à une diminution des efforts mécaniques que doit supporter ledit système de récupération d'énergie.

### BREVE DESCRIPTION DES DESSINS

D'autres caractéristiques et avantages de l'invention ressortiront également de la description et des dessins annexés, donnés à titre d'exemples illustratifs et non limitatifs dans lesquels :
- la figure 1 est une illustration schématique d'un exemple de réalisation d'une turbine d'un système de récupération d'énergie conforme à l'invention ;
- la figure 2 est une vue en section d'une extrémité de la turbine de la figure 1 montée sur un câble ou une conduite ;
- les figures 3a et 3b illustrent respectivement, selon des vues en section transversale, deux exemples de montage de l'autre extrémité de la turbine de la figure 1,
- la figure 4 illustre schématiquement un autre exemple de réalisation du système de récupération d'énergie conforme à l'invention, et
- la figure 5 illustre schématiquement, selon une vue partielle en coupe, un détail d'un exemple de réalisation du système de récupération d'énergie conforme à l'invention.

### MODES DE REALISATION E L'INVENTION

Les éléments structurellement et fonctionnellement identiques, présents sur plusieurs figures, conservent les mêmes références numériques ou alphanumériques.

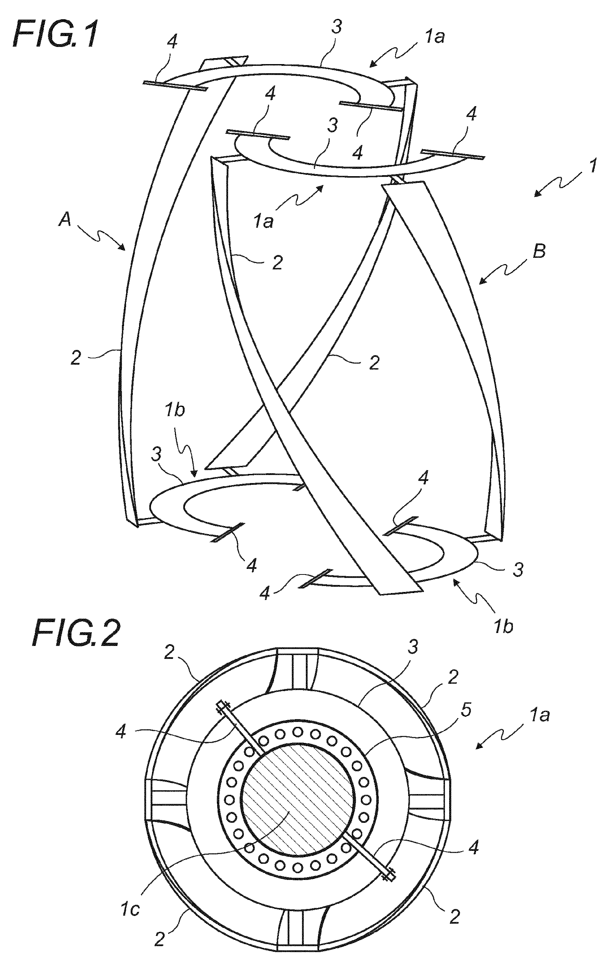

La figure 1 illustre schématiquement une turbine **1** d'un système de récupération d'énergie conforme à l'invention. La turbine **1** présente une enveloppe externe de forme sensiblement cylindrique avec des aubes **2** reliées entre elles à chacune des extrémités longitudinales de ladite turbine **1**, et ce par l'intermédiaire d'une bague de liaison **3.**

La turbine **1** est avantageusement associée à un alternateur, lequel alimente des capteurs de contrôle et de surveillance, également non représentés.

Les organes de montage, la turbine **1** ainsi que l'alternateur sont avantageusement constitués en deux parties séparables, ainsi qu'on peut bien l'observer sur la figure 1.

Ainsi, la turbine **1** est constituée de deux parties A et B, représentées de façon séparée sur la figure 1. Une fois ces parties A et B positionnées autour d'un câble ou d'une conduite **1c**, elles sont assemblées par l'intermédiaire d'éléments d'assemblage **4.** On obtient ainsi un montage rapide et facile de la turbine **1** sur un câble ou une conduite **1c**. Une séparation ou un démontage s'en trouve facilité par la même occasion.

Ces éléments d'assemblage **4** sont connus en tant que tels et ne sont donc pas décrits davantage. A titre d'exemple, on peut citer des liaisons du type vis-écrou, brides d'accrochage ou autres.

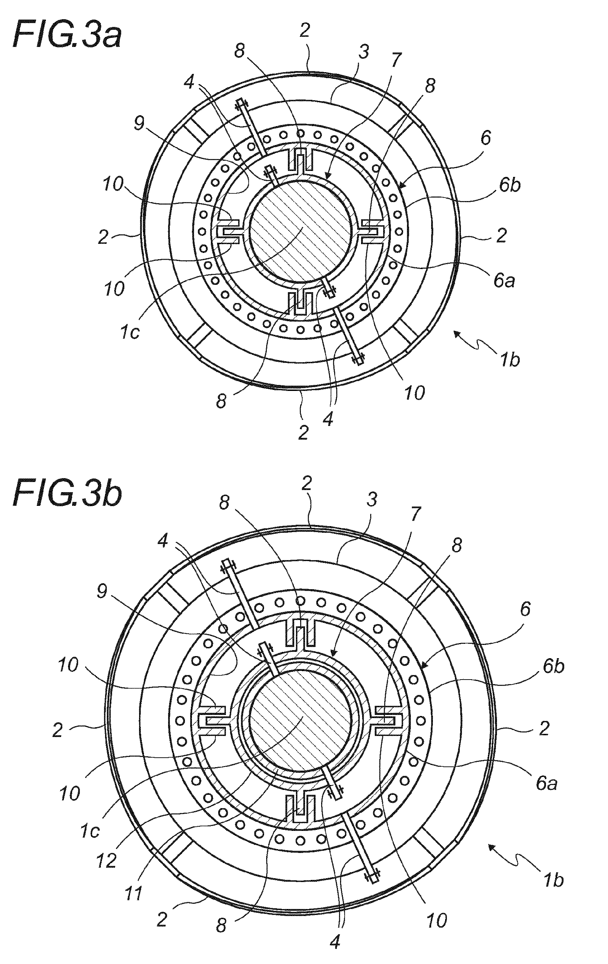

Selon l'exemple de réalisation du système de récupération d'énergie conforme à l'invention et illustré aux figures 2 et 3a, la turbine **1** présente une première extrémité longitudinale **1a** ou partie supérieure, dans laquelle les organes de montage comprennent un premier roulement **5** réalisant l'interface entre la bague de liaison **3** et le câble ou la conduite **1c**. Les deux parties du premier roulement **5** sont avantageusement enserrées et maintenues en position par la bague **3.** Alternativement, le premier roulement **5** peut également être pourvu d'éléments d'assemblage **4**.

Le câble ou la conduite **1c** est flexible. Une conduite **1c** sous-marine destinée par exemple à acheminer un fluide, tel que du pétrole, peut présenter un diamètre de 80 cm.

Un second roulement **6** est disposé à une seconde extrémité longitudinale **1b** ou partie inférieure de ladite turbine **1**. Le second roulement **6** est relié au câble ou à la conduite **1c** par l'intermédiaire de moyens de compensation d'efforts et de contraintes.

Les moyens de compensation comprennent un support **7** solidaire de la conduite ou du câble **1c**. Le support **7** est pourvu sur sa périphérie externe de languettes radiales **8** espacées angulairement de 90°. Ces languettes radiales **8** s'étendent librement selon une direction s'éloignant du câble ou de la conduite **1c**.

Les moyens de compensation comprennent également un corps périphérique **9** entourant le support **7**, et pourvu de glissières **10** radiales et internes.

Les glissières **10** coopèrent chacune avec jeu mécanique sur une languette radiale.

Le second roulement **6** est monté de façon fixe sur le corps périphérique **9** avec sa partie intérieure **6a**. La partie extérieure **6b** du second roulement **6** est solidaire de la turbine **1**. Cette solidarisation est obtenue par l'intermédiaire de la bague **3** de la seconde extrémité longitudinale **1b**, enserrant ledit second roulement **6**.

Le support **7,** la pièce périphérique **9** et le second roulement **6** sont constitués de deux parties reliées entre-elles par des éléments d'assemblage **4**.

Selon un autre exemple de réalisation, des éléments d'assemblage **4** ne sont prévus que sur la bague **3** et sur le support **7**. Les deux parties, respectivement de la pièce périphérique **9** et du second roulement **6**, sont en contact jointif et maintenus en position par la bague **3**.

Un autre exemple de réalisation du système récupération d'énergie conforme à l'invention est illustré au sein des figures 2 et 3b. Dans cet exemple de réalisation, au niveau de la seconde extrémité longitudinale **1b**, le support **7** comprend une liaison à rotule. Ainsi, une partie interne de rotule **11** est montée fixe sur le câble ou la conduite **1c**, et une partie externe de rotule **12** comportant les languettes radiales **8** est montée mobile sur ladite partie interne de rotule **11**.

La partie interne de rotule **11**, la partie externe de rotule **12**, la pièce périphérique **9** et le second roulement **6** sont constitués de deux parties reliées entre-elles par des éléments d'assemblage **4**.

Selon un autre exemple de réalisation, des éléments d'assemblage **4** ne sont prévus que sur la bague **3** et sur la partie de rotule externe **12**, les deux pièces de la partie de rotule interne **11** étant maintenues en position par ladite rotule externe **12.** Les deux parties, respectivement de la pièce périphérique **9** et du second roulement **6**, sont en contact jointif et maintenus en position par la bague **3**.

Ainsi, en plus des deux degrés de liberté transversaux autorisés par un coulissement des glissières **10** sur les languettes radiales **8**, il est possible d'obtenir avec l'exemple de réalisation illustré à la figure 3b, un mouvement de rotation autour d'un axe de rotation supplémentaire entre l'axe du câble ou de la conduite **1c** et l'axe de la turbine **1**. Les efforts générés par une flexion du câble ou de la conduite **1c** peuvent ainsi être absorbées avec un maximum d'efficacité. Les sollicitations mécaniques de la turbine **1** sont ainsi substantiellement diminuées.

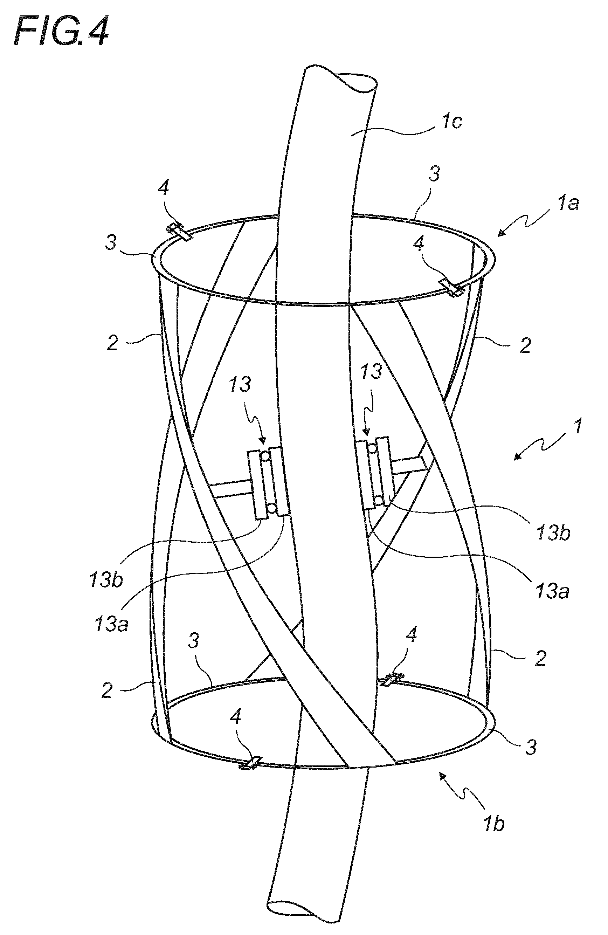

La figure 4 illustre un autre exemple de réalisation du système de récupération d'énergie conforme à l'invention, dans lequel les organes de montage comprennent un roulement **13** s'étendant selon un plan central et transversal à la turbine **1**.

La liaison obtenue par l'intermédiaire de cet unique roulement **13** permet de constituer les moyens de compensation. Le roulement **13**, constitué avantageusement par un roulement à rouleaux comporte une partie interne **13a** fixée sur le câble ou la conduite **1c**, et une partie externe **13b** solidaire de la turbine **1**. Le roulement **13** est avantageusement un roulement à rouleaux pour encaisser les porte-à faux de la turbine **1**.

Chaque extrémité longitudinale **1a** et **1b** est libre et formée par les extrémités des aubes **2** reliées entre elles par l'intermédiaire d'une bague circulaire **3**. Les éléments d'assemblage prévus sur les bagues **3** et sur la partie de roulement interne **13a** et externe **13b** permettent d'assembler et de monter le système de récupération d'énergie sur le câble ou la conduite **1c**.

Une configuration telle que représentée à la figure 4 permet alors d'éviter qu'une flexion ou une torsion du câble ou de la conduite **1c**, ne génère des contraintes ou des efforts néfastes sur la turbine **1**.

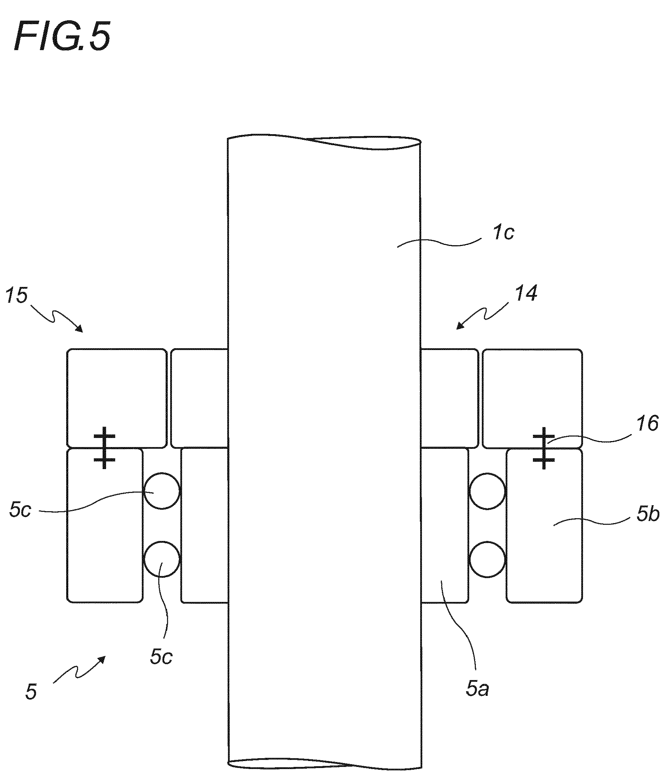

A titre d'exemple, la figure 5 illustre schématiquement un exemple de montage d'un alternateur en deux parties sur le câble ou la conduite **1c**. Le premier roulement **5**, du genre roulement à billes, comprend un bague intérieure 5a fixe et une bague extérieure **5b** mobile. L'alternateur comprend d'une part un stator **14** comportant des bobinages et solidaire de la bague intérieure **5a** et d'autre part un rotor **15** monté sur la bague extérieure **5b** à l'aide d'éléments de fixation **16**.

Il est évident que la présente description ne se limite pas aux exemples explicitement décrits, mais comprend également d'autres modes de réalisation et/ou de mise en oeuvre. Ainsi, une caractéristique technique décrite peut être remplacée par une caractéristique technique équivalente, sans sortir du cadre de la présente invention.

## Revendications

1. Système de récupération d'énergie renouvelable pour générer localement de l'énergie électrique destinée notamment à alimenter des capteurs de contrôle associés à un câble aérien ou sous-marin ou à une conduite aérienne ou sous-marine (1c), ledit système comprenant une turbine (1) d'enveloppe externe sensiblement cylindrique montée rotative sur le câble ou sur la conduite (1c) à l'aide d'organes de montage et un alternateur relié cinématiquement ou intégré à ladite turbine (1), **caractérisé en ce que** les organes de montage et la turbine (1) sont constitués en deux parties (A, B) séparables, pourvues d'éléments d'assemblage (4) pour permettre leur assemblage une fois positionnées sur le câble ou sur la conduite (1c).

2. Système de récupération d'énergie renouvelable selon la revendication 1, **caractérisé en ce que** chaque extrémité longitudinale (1a,1b) de la turbine (1) est formée par les extrémités d'aubes (2) reliées entre-elles par l'intermédiaire d'une bague circulaire (3) portant des éléments d'assemblage (4).

3. Système de récupération d'énergie renouvelable selon la revendication 2, **caractérisé en ce que** les organes de montage sont conçus pour s'adapter à un câble ou à une conduite (1c) flexible, les dits organes de montage comportant à cet effet des moyens pour absorber ou éviter des efforts et des contraintes résultant d'une flexion ou d'une torsion dudit câble ou de ladite conduite (1c).

4. Système de récupération d'énergie renouvelable selon la revendication 3, **caractérisé en ce que** les organes de montage comprennent un roulement (13) s'étendant selon un plan central et transversal à la turbine (1), ledit roulement (13) unique constituant ainsi de par son positionnement les moyens de compensation.

5. Système de récupération d'énergie renouvelable selon la revendication 3, **caractérisé en ce que** les organes de montage comprennent un premier roulement (5) disposé à une première extrémité longitudinale (1a) de la turbine (1), et un second roulement (6) disposé à une seconde extrémité longitudinale (1b) de ladite turbine (1), ledit second roulement (6) étant relié au câble ou à la conduite (1c) par l'intermédiaire des moyens de compensation.

6. Système de récupération d'énergie renouvelable selon la revendication 5, **caractérisé en ce que** les moyens de compensation comprennent :
▪ un support (7) solidaire de la conduite ou du câble (1c),
▪ ledit support (7) étant pourvu sur sa périphérie externe de languettes radiales (8) espacée angulairement de 90°, et
▪ un corps périphérique (9) entourant le support (7) et pourvu de glissières (10) radiales et internes, engagées chacune avec jeu mécanique sur une languette radiale (8), le second roulement (6) étant monté fixe avec sa partie intérieure (6a) sur ledit corps périphérique (9), sa partie extérieure (6b) étant solidaire de la turbine (1).

7. Système de récupération d'énergie renouvelable selon la revendication 6, **caractérisé en ce que** le support (7) comprend une partie de rotule interne (11) montée fixe sur câble ou sur la conduite (1c) et une partie de rotule externe (12) comportant les languettes radiales (8) et montée mobile sur la partie de rotule interne (11).

8. Câble (1c) électrique et/ou de communication flexible comportant au moins un système conforme à l'une quelconque des revendications 1 à 7.

9. Conduite (1c) flexible par l'acheminement de fluides comportant au moins un système conforme à l'une quelconque des revendications 1 à 7.
